# EUROPEAN PATENT SPECIFICATION

(11) **EP 1 621 595 B1**
(45) Date of publication and mention of the grant of the patent: **12.09.2007**
(21) Application number: 05016312.0
(22) Date of filing: 27.07.2005
(51) Int. Cl.: C09G 1/02

(54) **Method of manufacturing polishing slurry for use in precise polishing process**
Verfahren zum Herstellen von Polieraufschlämmungen zur Verwendung in Präzisionspolierung
Procédé de fabrication d'une suspension de polissage pour utilisation en polissage de précision

(30) Priority: 30.07.2004 JP 2004223914
(43) Date of publication of application: 01.02.2006
(73) Proprietor: NEC Electronics Corporation, Kawasaki, Kanagawa 211-8668 (JP); TOKYO MAGNETIC PRINTING CO., LTD., Taito-ku Tokyo 110-0016 (JP)
(72) Inventor: Kunugi, Takaharu, Nakahara-ku Kawasaki Kanagawa 211-8668 (JP); Kaku, Tomohiro, Taito-ku Tokyo 110-0016 (JP); Sasakura, Takanori, Taito-ku Tokyo 110-0016 (JP)
(74) Representative: Glawe, Delfs, Moll

(56) References cited:
- EP-A- 1 477 538
- US-A- 5 114 437
- US-A1- 2001 044 210
- US-A1- 2002 028 636
- US-B1- 6 485 793
- US-B1- 6 492 274
- PATENT ABSTRACTS OF JAPAN vol. 2000, no. 16, 8 May 2001 (2001-05-08) & JP 2001 009706 A (TOSHIBA CORP), 16 January 2001 (2001-01-16)

## Description

### BACKGROUND OF THE INVENTION

### 1. Field of the Invention:

The present invention relates to a method of manufacturing a polishing slurry for use in a precise polishing process, and more particularly, to a method of manufacturing a polishing slurry suitable for use in chemical mechanical polishing of semiconductor substrates.

### 2. Description of the Related Art:

Conventionally, a CMP (Chemical Mechanical Polishing) method has been used for planarizing an interlayer film and the like in a semiconductor integrated circuit manufacturing process. The CMP method is used for the reasons set forth below. To employ design rules in which conducting patterns are formed in a minute pattern and high density in order to accomplish a further reduction in the size of semiconductor integrated circuits, it is indispensable to reduce space between the patterns by employing an exposure beam at a shorter wavelength in lithography techniques. As a result, even minute asperities, if any, on a semiconductor substrate (wafer), would significantly affect minute patterns, possibly resulting in a failure to form desired patterns. In this way, since more planarization of semiconductor substrates is required to accurately form desired patterns, the CMP method is employed because of its superiority in planarization.

The CMP method is also employed as a step to form metal wires of semiconductor integrated circuits. Specifically, a metal film is formed such that it is filled into the recessed portions of grooves and connection holes formed in an insulating film on a semiconductor substrate made of silicon, and then the metal film, except for that in the recessed portions, is polished by the CMP method for removal to form electric connections such as buried wires, via plugs, contact plugs and the like. When another layer or a conducting pattern is formed on a surface with electric connections formed thereon, the surface again undergoes the CMP-based planarization process because this surface must be maximally planarized as well.

Recently, copper has been mainly used for metal wires in order to increase the processing speed of semiconductor integrated circuits. In the following, the CMP method will be described, using an example of polishing Cu film on a semiconductor substrate.

Generally, the CMP method comprises steps of dropping a polishing slurry mainly composed of an oxidizer and an abrasive onto a polishing pad, and rotating, for example, a semiconductor substrate with a Cu film formed thereon relative to the polishing pad and the semiconductor substrate being in contact with the polishing pad. The basic principles of the CMP method lie in that Cu film on the surface of the semiconductor substrate is oxidized by a chemical action of the oxidizer, and the oxidized Cu film is mechanically removed by the abrasive. The polishing slurry contains an abrasive and chemicals such as an oxidizer, a pH adjuster, an antioxidant, and the like.

Ideally, a polishing slurry for use in the CMP method has a large number of abrasive particles, which have diameters regulated to several nm, and are uniformly dispersed in actual use. However, in the process of manufacturing a polishing slurry, larger particles and agglomerated particles, though in trace amounts, are formed and contained in the resulting polishing slurry. It has so far been believed that when this polishing slurry is used for the CMP method, the larger particles and agglomerated particles of the abrasive cause scratches on the surface of a polished semiconductor substrate, and the scratches introduce defects such as degraded electric characteristics, thus resulting in a lower yield rate of semiconductor substrates. To solve this problem, larger particles and agglomerated particles are generally removed by a filter at the end of the polishing slurry manufacturing process, or immediately before the polishing slurry is used for polishing.

For example, Japanese Patent Application Laid-open No. 2001-9706 discloses an apparatus for filtering a polishing slurry, with the purpose of removing larger particles when the polishing slurry is supplied to a CMP device. The apparatus comprises a supply pipe for supplying the polishing slurry therethrough, a centrifugal drum for centrifuging the polishing slurry, a filter for filtering the centrifuged polishing slurry, and a discharge pipe for discharging the polishing slurry filtered by the filter.

When a polishing slurry is filtered by a filter with a small mesh size for removing larger particles at the end of a polishing slurry manufacturing process or immediately before the polishing slurry is used, the filter is susceptible to clogging, though effective in reducing the number of larger particles. For this reason, the filter must be frequently replaced with a new one, resulting in a low yield of the polishing slurry. Japanese Patent Application Laid-open No. 2001-9706, in addressing this problem, proposes a method to prolong the lifetime of a filter by centrifuging a polishing slurry before the filtering in order to remove some larger particles from the polishing slurry to make the filter less susceptible to clogging.

When a filter with a small mesh size is used, or when the centrifugal separation is performed before filtering as described in Japanese Patent Application Laid-open No. 2001-9706, a large number of larger particles can be removed from a polishing slurry. However, even though a large number of larger particles have been removed from a polishing slurry, the amount of scratches on the surface of a semiconductor substrate is not reduced to any great extent when the resulting polishing slurry is used for polishing the semiconductor substrate. Moreover, there is a problem of lower uniformity in the thickness that has been reduced by polishing, and on the polished surface that remains.

Also, because the centrifugal separation is intended to relieve the clogging of the filter, as mentioned above, the method described in Japanese Patent Application Laid-open No. 2001-9706 can only apply a small centrifugal force. For this reason, this method can only remove fairly larger particles of a polishing slurry, but is incapable of removing most of the particles which cause scratches.

As described above, filtering by a filter having a small mesh size or by centrifugal separation can reduce scratches slightly more than filtering by a filter having a large mesh size, but cannot sufficiently reduce scratches and moreover degrades the polishing properties.

### SUMMARY OF THE INVENTION

It is an object of the present invention to provide a method of manufacturing a polishing slurry which is capable of effectively reducing scratches on a polished surface, and accomplishing desired polishing properties.

A method of manufacturing a polishing slurry according to the present invention comprises steps of dispersing an abrasive in a liquid to be processed which is a mixture made up of the abrasive and the dispersion medium, classifying the liquid to be processed after the step of dispersing, and adjusting the liquid to be processed by adding chemicals so that it is in a desired composition after the step of classifying. The step of classifying selectively removes particles of the abrasive which will cause scratches during polishing with the polishing slurry.

The present invention relates to a method of manufacturing a polishing slurry, comprising the steps of:
dispersing an abrasive in a dispersion medium so as to obtain a liquid to be processed which is a mixture of the abrasive and the dispersion medium;
**characterized by** centrifugally classifying the liquid to be processed with a centrifugal acceleration of 500G to 2500G to reduce the number of particles having a diameter of 9.99 µm or more to 100 or less in a volume of 1 ml of the liquid to be processed, after said dispersing step;
adjusting the liquid to be processed by adding chemicals and/or adjusting the concentration of the abrasive and /or adjusting pH, after said classifying step

The present invention relates preferably to said method wherein said classifying step reduces the number of particles and particle groups having a weight equal to or heavier than the weight corresponding to a particle having a diameter of 0.99 µm, to 20 % or less of that before the classification, and reduces the number of particles and particle groups having a weight equal to or heavier than the weight corresponding to a particle having a diameter of 9.99 µm, to 1 % or less of that before the classification, within said abrasive in the liquid to be processed. The present invention also relates preferably to said method, wherein said classifying step includes removing top 3 wt% of the heaviest particles within the abrasive in the liquid to be processed.

According to the method described above, the polishing slurry will never fluctuate in composition such as one having a reduced concentration of the abrasive, an increased concentration of chemicals, and the like, and it is possible to selectively and efficiently remove particles which cause scratches on a polished surface in order to accomplish satisfactory polishing.

Since the step of classifying is centrifugally classifying the liquid to be processed, heavy particles can be removed in an efficient manner.

The step of classifying is preferably performed so as to reduce the number of particles and particle groups having a weight equal to or heavier than a weight corresponding to a particle having a diameter of 0.99 µm, to 20 % or less of that before the classification, and to reduce the number of particles and particle groups having a weight equal to or heavier than a weight corresponding to a particle having a diameter of 9.99 µm, to 1 % or less of that before the classification, within said abrasive in the liquid to be processed. This is because when heavier abrasive particles and larger abrasive particles are contained in the polishing slurry more than the percentage set forth above, the effect of preventing scratches is insufficient. The term "particle group" refers to an integrated unit composed of a plurality of particles by sintering, fusing, agglomeration, and the like.

The step of classifying may include selectively removing particles which are heavier than a predetermined weight. In this event, the predetermined weight may be set as appropriate by an operator, after estimating the weight of particles which cause scratches by taking the normal primary particles of the abrasive included in the polishing slurry that is to be manufactured as the standard. Further, the step of classifying includes removing the top 3 wt% of the heaviest particles within the abrasive in the liquid to be processed. Since particles which are small in size but heavy in weight can cause scratches, the foregoing step of classifying can effectively suppress scratches by previously removing such particles.

The step of adjusting may include adjusting at least the concentration of the abrasive and/or pH of the liquid to be processed. The polishing slurry can be maintained in a desired composition by performing the step of adjusting after the step of classifying.

The method may further comprise the step of filtering the liquid to be processed with a filter after the step of adjusting. In this event, it is possible to remove debris so far introduced into the liquid to be processed during the manufacturing process. It should be noted that this step of filtering is not intended to remove large abrasive particles as before, but is mainly intended to remove debris introduced from the outside.

According to the manufacturing method of the present invention, it is possible to manufacture a polishing slurry which can largely suppress scratches on polished surfaces during chemical mechanical polishing. Moreover, since the polishing slurry can be maintained in a desired composition, satisfactory polishing can be accomplished with desired properties.

The above and other objects, features and advantages of the present invention will become apparent from the following description with reference to the accompanying drawings which illustrate examples of the present invention.

### BRIEF DESCRIPTION OF THE DRAWINGS

Fig. 1 is a schematic process diagram for explaining a slurry manufacturing process according to the present invention;
Fig. 2 is a micrograph showing abrasive particles within a liquid to be processed after a step of classifying;
Fig. 3 is a micrograph showing abrasive particles removed by the step of classifying; and
Fig. 4 is a schematic process diagram for explaining another embodiment of a slurry manufacturing process according to the present invention.

### DESCRIPTION OF THE PREFERRED EMBODIMENTS

A method of manufacturing a polishing slurry according to the present invention comprises steps of dispersing an abrasive in a liquid to be processed which is a mixture of the abrasive and a dispersion medium; classifying the liquid to be processed after dispersion; and adjusting the liquid to be processed by adding chemicals so that it is in a desired composition after classification. In particular, the present invention is mainly characterized by the order of the steps, i.e., the step of classifying is performed after the step of dispersing, and the step of adjusting is performed after the step of classifying.

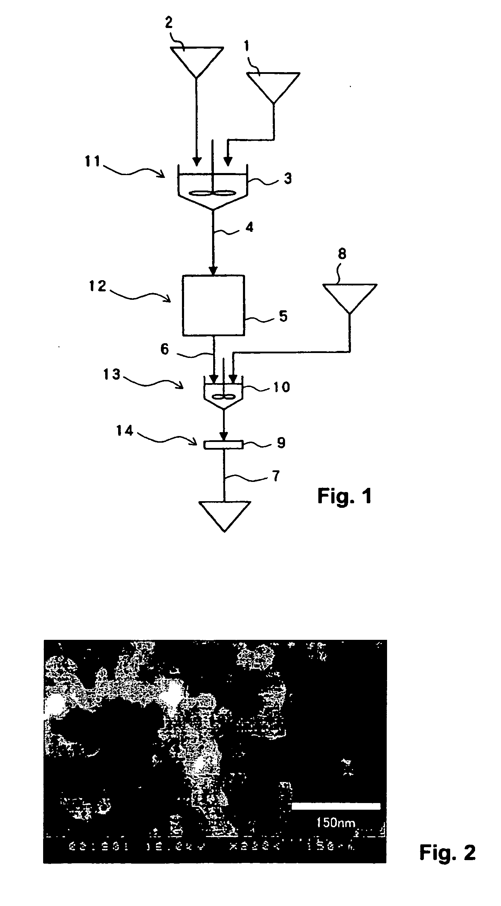

Fig. 1 is a process diagram schematically illustrating the method of manufacturing a polishing slurry according to the present invention.

In this method, first, at step 11, abrasive 1 and dispersion medium 2 are introduced into dispersing machine 3, and abrasive 1 is dispersed in dispersion medium 2 as uniformly as possible. In this event, only abrasive 1 and dispersion medium 2 are introduced into dispersing machine 3, or only abrasive 1, dispersion medium 2, and a small amount of dispersant (not shown) are introduced into dispersing machine 3. Chemicals required for the polishing slurry, other than the dispersant, are not introduced at this stage because they may adversely affect the dispersion property by agglomerating abrasive 1 and so on.

There are no particular limitations that apply to dispersing machine 3 and the dispersing method. The dispersion step can be performed by an impeller agitation type dispersing machine, a rotor high-speed agitation type dispersing machine, an ultrasonic dispersing machine, particle collision type dispersing machine, beads mill dispersing machine, a kneader dispersing machine, a ball mill dispersing machine, or the like. The amounts of abrasive 1 and dispersion medium 2 that are to be added and the duration of the dispersion step may be set as appropriate for a particular dispersion method by taking into consideration of dispersion efficiency. For example, when abrasive 1 is dispersed in dispersion medium 2 such that a liquid to be processed containing abrasive 1 and dispersion medium 2 has a high viscosity and a high concentration, with a view to dispersion efficiency, liquid 4 to be processed after dispersion may be diluted by adding dispersion medium 2 thereto.

Next, at step 12, liquid 4 to be processed after dispersion is classified. Since liquid 4 that is to be processed must be classified in a stable dispersion state after the dispersion step in order to selectively remove particles which will cause scratches, liquid 4 to be processed is classified before a variety of chemicals are added thereto. Centrifugal classification is performed for effectively removing a variety of non-uniform particles, included in liquid 4 that is to be processed after dispersion, which will cause scratches, including primary larger particles, sintered particles, fused particles, agglomerated particles, and the like. In particular, centrifugal classifier 5 schematically illustrated in Fig. 1 is used because it can capture particles having large dimensions and particles having large specific gravities and therefore effectively remove a variety of non-uniform particles which will cause scratches, by setting an appropriate centrifugal acceleration.

The centrifugal acceleration is set during the centrifugal classification in a range of 500 G to 2500 G, and more preferably in a range of 1500 to 2000 G.

Preferably, this classification step reduces the number of particles and particle groups having a weight equal to or heavier than a weight corresponding to a particle having a diameter of 0.99 µm, to 20 % or less of that before the classification, and also reduces the number of particles and particle groups having a weight equal to or heavier than a weight corresponding to a particle having a diameter of 9.99 µm, to 1 % or less of that before the classification, within the abrasive in the liquid that is to be processed. As a result, most of the larger particles are removed by this classification step, resulting in few larger particles that remain within the liquid to be processed after classification. There are 100 or fewer, more preferably 50 or fewer abrasive particles having a diameter of 9.99 µm or more in 1 ml of the liquid that is to be processed.

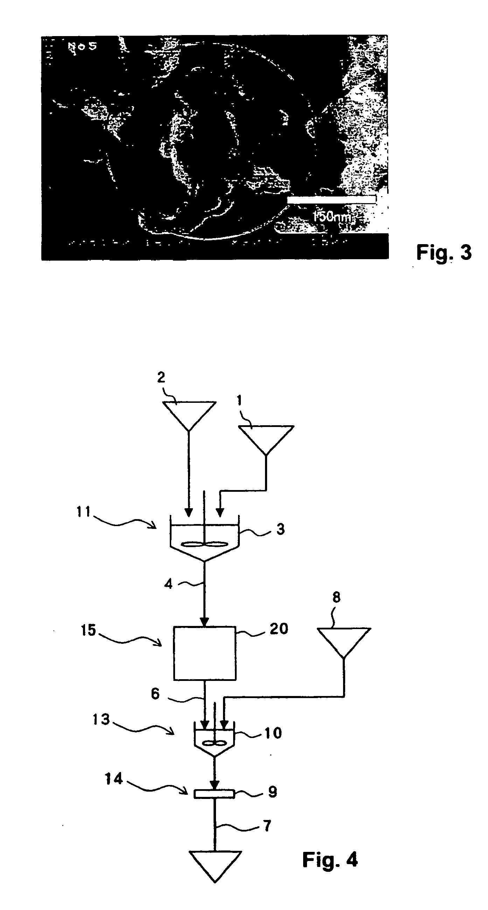

In this way, it is possible to largely reduce scratches on a polished object when they are polished by the polishing slurry manufactured by the foregoing manufacturing method. Fig. 2 shows abrasive particles in liquid 6 that is to be processed after classification, and Fig. 3 shows abrasive particles removed by the classification step.

The centrifugal classification can remove particles having large specific gravities, more strictly speaking, heavy particles. For example, in case where particles have the same specific gravity, particles having a larger diameter among them are preferentially removed. Since it is thought that scratches will be caused by particles and particle groups which are heavy and hard, it is desirable to remove them. For example, in this classification step, the heaviest particles within a predetermined range may be removed from the abrasive contained in the liquid to be processed. Alternatively, this classification step may selectively remove particles having weights larger than a predetermined value. In any case, a predetermined weight range or a predetermined value (upper limit value for the weight) may be set as appropriate by an operator, after estimating the weight of particles which cause scratches by taking the weight, concentration, and the like of normal primary particles of the abrasive included in the polishing slurry to be manufactured, as the standard.

As an example, assuming that an abrasive is made of fumed silica (absolute specific gravity is 2.2) with normal primary particles having a diameter of 30 nm and a weight of approximately 3.1x10⁻¹⁴ g, a scratch prevention effect is expected by removing the top 3 wt% or more of the heaviest particles. In this event, a larger particle having a diameter of 9.99 µ m, has a weight of approximately 1.2 x 10⁻⁶ g which is 10⁷ times or more heavier than the normal primary particle However, these values can vary depending on the absolute specific gravity, primary particle diameter, and the like of the material used for an abrasive.

Next, at step 13, a variety of chemicals 8 are added to liquid 6 to be processed after classification to make adjustments to a variety of properties such as a concentration adjustment, pH adjustment, and the like. Consequently, desired polishing slurry 7 is provided. In this adjustment step, in addition to the adjustment to the concentration of the polishing particles, a variety of adjustments are made by adding chemicals 8 that are required for chemical reactions, such as oxidizer, organic acid, antioxidant, and the like, such that polishing slurry 7 has the desired properties for use in the CMP method. Further, for a water type slurry, pH is adjusted by adding a pH adjuster. Otherwise, a variety of chemicals 8 such as dispersion stabilizer, surface-active agent, liquid lubricant, solid lubricant, acid, alkali, corrosion inhibitor, anti-freezing agent, preservative, and the like may be added in order to adjust a variety of properties according to need.

Desired polishing slurry 7 is completed after the properties have been adjusted in the foregoing manner. In the embodiment illustrated in Fig. 1, a step for filtering is further performed at step 14 to remove indefinite debris and the like that may have been introduced into polishing slurry 7 during the process up to this step. Filter 9 used here is not intended to remove larger particles of abrasive 1. Therefore, when preferred particles of the abrasive for use in polishing have diameters in a range of several tens to several hundred nm, a nominal mesh size may be approximately 20 µm. A filter having a larger mesh size may even be used depending on the size of particles of the abrasive, but taking into account the yield of polishing slurry 7, it is more preferable that filter 9 used herein has a nominal mesh size of approximately 5 to 20 µm. The filtering step with filter 9 may be omitted in some cases.

Next, a detailed description will be given in order to explain the reasons why conventional problems can be solved by the method according to the present invention described above.

It has been observed in the past that the number of scratches on surfaces of polished objects (for example, semiconductor substrates) is not much reduced when they are polished with a polishing slurry from which a lot of larger particles had been removed by a filter having a finer mesh size or a combination of centrifugal separation with filtering. In this respect, the inventors estimated as follows.

An abrasive included in a polishing slurry inherently contains a variety of non-uniform particles other than primary larger particles, that have large diameters, such as sintered particles, fused particles, agglomerated particles, and the like that result from coupling primary particles together in the manufacturing process. In particular, an abrasive made of fumed silica manufactured by a vapor phase reaction method involves the formation of a large number of so-called primary larger particles, whose diameters have grown due to a reactive gas supply balance, a reaction temperature distribution, and the like, sintered particles sintered by heat generated during the reaction, and so forth. The fumed silica is manufactured by burning a gas material at temperatures of 1000 to 2000 °C, and its diameter depends on the combustion temperature and the amount of gas. Manufactured primary particles vary in diameter due to temperature distribution and gas distribution during the combustion. Among primary particles that have various diameters, large ones in particular are labeled primary larger particles. Also, primary particles which are bonded together by heat during the manufacturing process are labeled sintered particles. Since silica is melted by strong alkali, primary particles melted in liquid that is to be processed and which are bonded to each other are labeled fused particles.

It has been conventionally thought that large sized particles cause scratches. For this reason, it has been thought that scratches would be reduced by removing as many large particles as possible by a filter having a finer mesh size or by performing centrifugal separation. However, the number of scratches on the surfaces of polished objects was not much reduced, even when the CMP method was practiced with a polishing slurry from which large particles had been removed. From this fact, the inventors found that there were particles which would cause scratches though they have relatively small diameters, and there were particles which hardly cause scratches among larger and agglomerated particles which so far had been thought to be a main factor of scratches.

A variety of chemicals such as a pH adjuster for generating chemical reactions are added to polishing slurries for use with the CMP method. When these chemicals are added to a polishing slurry which has uniformly dispersed abrasive particles, abrasive particles softly agglomerate to one another. However, large abrasive particles that result from the soft agglomeration can readily decompose because of a pressure applied for polishing, so that they do not cause scratches on a polished surface. Thus, removal of softly agglomerated particles does not contribute to the prevention of scratches. If softly agglomerated particles are removed notwithstanding this fact, the polishing properties are degraded in conjunction with a reduction in the concentration of the abrasive and fluctuations in the composition of the polishing slurry, as will be later described. For example, according to the method disclosed in Japanese Patent Application 2001-9706, a polishing slurry that has its properties adjusted by a variety of chemicals that are added thereto, is centrifuged, so that the centrifugal separation removes softly agglomerated particles that do not cause scratches, and these particles are preferably left in the polishing slurry.

On the other hand, an abrasive comprises undispersed particles which are difficult to separate into individual particles for uniform dispersion in the dispersion step, such as primary larger particles, sintered particles, fused particles, and the like. Specifically, even if shearing stress is uniformly applied to particles including sintered particles, agglomerated particles, and the like, it is physically difficult to decompose all of them so that they cannot revert to the state of primary particles, and some undispersed particles remain. While it is thought that these undispersed particles include particles which will cause scratches, they cannot always be filtered by a filter if these particles have not grown very much. The sintered particles, agglomerated particles, fused particles, and the like are larger than normal primary particles as a matter of course, but still fairly small, so that it is difficult to remove them even using a filter having a somewhat finer mesh size.

As described above, it has been conventionally impossible to sort out particles which will cause scratches on polished surfaces from particles which will not cause scratches on polished surfaces and to selectively remove the former. This has been resulted in difficulties in suppressing scratches.

As a result of the foregoing discussion, it can be thought that simple removal of larger particles from a polishing slurry is not very effective for suppressing scratches, but it is necessary to selectively remove particles which will cause scratches. In addition, it is thought that heavy and hard particles and particle groups will cause scratches. However, taking a particle group composed of ten primary particles as an example, it can be thought that the particle group will cause scratches if the ten primary particles are coupled with strong forces, whereas the particle group will not cause scratches if ten primary particles are simply electrically agglomerated with low coupling forces even though they have the same weight as the particle group composed of the ten primary particles which are coupled with strong forces.

Also, conventionally, larger particles are removed by centrifugal separation and/or filtering with a filter at the end of the polishing slurry manufacturing process or immediately before the polishing slurry is used. In this event, a portion of abrasive particles is removed from the polishing slurry that has been adjusted to have a desired composition by addition of a variety of chemicals, resulting in a lower concentration of the abrasive in the polishing slurry and resulting in a change in the composition of the polishing slurry. In particular, when many larger particles are removed in order to prevent scratches as much as possible, as is the case with the use of a filter having a finer mesh size, or a combination of centrifugal separation and filtering using a filter as described in Japanese Patent Application No. 2001-9706, the concentration of the abrasive is significantly lower. The centrifugal separation and additional filtering by a filter remove a large part of the abrasive in the polishing slurry, resulting in a largely reduced concentration of the abrasive, for example, from 10 wt% to 8 wt%. As a result, when the surface of a polished object is polished using this polishing slurry, there is a problem of lower uniformity in the thickness that has been reduced by polished, and on the polished surface that remains, for such reasons as a shortage of abrasive particles, and the like. In order to make a polishing slurry in a desired composition, the amounts of chemicals that are to be added such as an oxidizer must be changed in accordance with a reduction in the polishing particles. However, the degree to which the concentration of the abrasive varies differs each time the polishing slurry is manufactured, so that the concentration can be known only after the polishing slurry is actually centrifuged and/or filtered, thus giving rise to difficulties in predicting the concentration.

After all, when the polishing slurry is filtered by a filter having a finer mesh size or centrifuged with a large centrifugal force, a large amount of abrasive particles that do not contribute to scratches is removed from the polishing slurry, and this result in a large change in the composition of the polishing slurry and eventual exacerbation of polishing properties, though the scratches can be more or less reduced. When the polishing slurry is filtered by a filter having a larger mesh size or centrifuged with a small centrifugal force, only a small amount of abrasive particles is removed as a matter of course, thus failing to largely reduce scratches.

Thus, the present invention adjusts the polishing slurry such that it is in a desired composition in adjustment step 13, after selectively removing in classification step 12 abrasive particles which will cause scratches. Therefore, the amount of chemicals 8 that are to be added can be adjusted as appropriate in accordance with the amount of abrasive particles that are removed in classification step, to accomplish a desired composition. Since the present invention does not remove particles which will not cause scratches such as softly agglomerated particles formed in the adjustment step, the concentration of the abrasive particles will not be unnecessary reduced.

Supposing that the adjustment step is performed without the classification step, this would result in a mixture of softly agglomerated particles that are produced when the concentration is adjusted or when chemicals are added, and particles which could not be uniformly dispersed in the dispersion step and will cause scratches. When this liquid to be processed is filtered by a filter having a finer mesh size in order to remove the particles which will cause scratches, a large number of softly agglomerated particles will also be captured even though they will not cause scratches. This unnecessarily promotes clogging of the filter which exacerbates the yield of the polishing slurry. In addition, the filtering step which uses a filter having a finer mesh size, or the centrifugal separation reduce larger particles in the liquid to be processed, but cannot selectively remove particles which will cause scratches, and therefore fails to satisfactorily suppress scratches on polished surface.

On the other hand, polishing slurry 7 that is manufactured based on the present invention, can be maintained in a desired composition and can accomplish satisfactory polishing that has the desired properties. Then, in the classification step, the present invention can selectively and efficiently remove particles which will cause scratches on polished surfaces, particularly, particles which are heavier to some degree as compared to normal primary particles, for example, primary larger particles, sintered particles, fused particles, agglomerated particles and the like, and can therefore largely suppress scratches on polished surfaces during polishing. The present invention is particularly suitable for manufacturing a polishing slurry which contains an abrasive made of fumed silica that in the past caused scratches, or a polishing slurry used in the CMP method which involves chemical reactions. Since the filtering step with filter 9 at step 14 of this embodiment is intended to remove debris rather than polishing particles, filter 9 used therein has a mesh size large enough to pass softly agglomerated particles therethrough, and is less susceptible to clogging.

The following description will be given of specific examples of the present invention. However, the present invention is not limited to these examples.

### [Example 1]

Polishing slurry 7 that contains abrasive 1 made of fumed silica and dispersion medium 2 made of water was manufactured in accordance with the manufacturing method according to the present invention.

As illustrated in Fig. 1, first, fumed silica (abrasive 1) and water (dispersion medium 2) were introduced into impeller type dispersing machine 3 such that the fumed silica had a dispersion concentration of 15 wt%. Then, at step 11, dispersion was performed for one hour with a rotational speed of 1000 rpm and with an impeller having a peripheral velocity of 20 m/sec. At this time, the number of particles having a diameter which was equal to or larger than 0.99 µm, and the number of particles having a diameter which was equal to or larger than 9.99 µm were counted within liquid 4 to be processed after dispersion, using particle size distribution measuring equipment (AccuSizer 780 [trade name] made by Particle Sizing Systems Co.), not shown. The result of the counting is shown in Table 1.

**Table 1**

| number of particles per 1 ml of liquid to be processed | |
|---|---|
| number of particles with diameter of 0.99 *µ*m or more | number of particles with diameter of 9.99 *µ* m or more |
| 65707 (particle counts per ml) | 22708 (particle counts per ml) |

Next, liquid 4 to be processed, which had been dispersed, was supplied to centrifugal classifier 5 (Nano-cut ECA 1000 [trade name] made by Krettek) at a rate of 1.5 l/min using a diaphragm pump, not shown. Then, at step 12, liquid 4 to be processed was centrifugally classified by centrifugal classifier 5 with a rotational speed of 3000 rpm and with a centrifugal drum thereof having a centrifugal acceleration (centrifugal field) of 1700 G. The number of particles having diameters in the abovementioned two ranges were respectively counted in the liquid 6 to be processed after classification, using the same particle size distribution measuring equipment as in the foregoing equipment (AccuSizer 780).

**Table 2**

| number of particles per 1 ml of liquid to be processed | |
|---|---|
| number of particles with diameter of 0.99 µm or more | number of particles with diameter of 9.99 µm or more |
| 9986 (particle counts per ml) | 40 (particle counts per ml) |

Then, liquid 6 to be processed after centrifugal classification was sent to a tank 10 through a discharge pipe for adjusting the properties, not shown. At step 13, liquid 6 that was to be processed was adjusted while it was being stirred such that the particle concentration was 10 wt%, and a variety of properties was also adjusted by adding necessary chemicals 8 such as organic acid, antioxidant, pH adjuster, and the like so that liquid 6 that was to be processed was in a desired composition. Further, at step 14, in order to remove foreign substances such as debris from the liquid to be processed after adjusting properties to achieve the desired composition, the liquid to be processed was filtered by filter 9 with a nominal mesh size of 20 µm. Polishing slurry 7 was manufactured in this way. The result of the CMP method conducted using this polishing slurry 7 will be described later.

### [Example 2 Comparative]

Similar to Example 1, polishing slurry 7 that contains abrasive 1 made of fumed silica and dispersion medium 2 made of water was manufactured in accordance with a manufacturing method illustrated in Fig. 4.

First, fumed silica (abrasive 1) and water (dispersion medium 2) were introduced into impeller type dispersing machine 3 such that the fumed silica has a dispersion concentration of 15 wt%. Then, at step 11, dispersion was performed for one hour with a rotational speed of 1000 rpm and with an impeller having a peripheral velocity of 20 m/sec. At this time, the number of particles having a diameter equal to or larger than 0.99 µm, and the number of particles having a diameter equal to or larger than 9.99 µm were respectively counted in liquid 4 to be processed after dispersion, using the same particle size distribution measuring equipment as in Example 1. The result of the counting is shown in Table 3.

**Table 3**

| number of particles per 1 ml of liquid to be processed | |
|---|---|
| number of particles with diameter of 0.99 µm or more | number of particles with diameter of 9.99 µm or more |
| 63207 (particle counts per ml) | 21506 (particle counts per ml) |

Next, liquid 4 to be processed, which had been dispersed, was left in processing tank 20 for two weeks for natural sedimentation. After liquid 4 to be processed had been left for two weeks, a hose, not shown, was inserted into processing tank 20 from above to extract supernatant fluid using a pump, not shown. After that, the numbers of the particles were counted in the supernatant fluid. The result of counting is shown in Table 4.

**Table 4**

| number of particles per 1 ml of liquid to be processed | |
|---|---|
| number of particles with diameter of 0.99 *µ* m or more | number of particles with diameter of 9.99 *µ* m or more |
| 21250 (particle counts per ml) | 87 (particle counts per ml) |

The supernatant fluid extracted by the pump was sent to tank 10 in order to adjust the properties. At step 13, liquid 6 that was to be processed was adjusted while it was being stirred such that the particle concentration was 10 wt%, and a variety of properties was also adjusted by adding necessary chemicals 8 such as organic acid, antioxidant, pH adjuster, and the like so that liquid 6 that was to be processed was in a desired composition. Further, at step 14, in order to remove foreign substances such as debris from the liquid to be processed after adjusting properties to achieve the desired composition, the liquid to be processed was filtered by filter 9 with a nominal mesh size of 20 µm. Polishing slurry 7 was manufactured in this way. The result of the CMP method conducted using this polishing slurry 7 will be described later. [Comparative Examples 1 - 4]

The properties of liquids to be processed, which had been dispersed in a manner similar to Example 1 (step 11), were adjusted in a manner similar to Example 1 (step 13) such that the liquid is in a desired composition, without undergoing centrifugal classification or natural sedimentation. Then, the liquids to be processed, whose properties had been adjusted such that the liquid is in a desired composition, were filtered by a variety of filters to remove larger particles. Specifically, the liquids to be processed were filtered by a filter having a nominal mesh size of 5 µm in Comparative Example 1; a filter having a nominal mesh size of 3 µm in Comparative Example 2; a filter having a nominal mesh size of 1 µm in Comparative Example 3; and a filter having a nominal mesh size of 0.5 µm in Comparative Example 4, to manufacture each of the polishing slurries. The results of the CMP method conducted using these polishing slurries will be described later.

### [Polishing Experiment]

A polishing experiment was made for practicing the CMP method using the polishing slurries of foregoing Examples 1, 2 and Comparative Examples 1 - 4. Semi-finished products made of semiconductor substrates (wafers) were used as objects to be polished. Specifically, each of the objects to be polished included a silicon substrate, an insulating film formed on the silicon substrate and patterned in a pattern that will become the base for a Damascene structure, using photolithography and dry etching technology, and a barrier metal film and a Cu film deposited thereon.

To evaluate the polished objects after polishing, the number of scratches on the entire surface of each wafer was counted by defect testing apparatus. For comparison, the number of particles in the polishing slurry and the number of scratches are shown in Table 5 for each of Examples 1, 2 and Comparative Examples 1 - 4. The number of scratches is indicated by a relative value where the number of scratches on Comparative Example 1 is set to 100. Also, the particle concentrations of the polishing slurries of Examples 1, 2 and Comparative Examples 1 - 4 are shown in Table 6. The particle concentration was found by measuring the weights before and after 100 g of each polishing slurry was heated in an evaporation pan at 200 °C for four hours to evaporate moisture, and indicated by a relative value where the particle concentration of Example 1 was set to 100.

**Table 5**

| | filter | number of particles per 1 ml of liquid to be processed | | number of scratches |
|---|---|---|---|---|
| | nominal mesh size | number of particles with diameter of 0.99 *µ* m or more | number of particles with diameter of 9.99 *µ* m or more | relative value |
| Example 1 | 20 *µ* m | 9937 | 29 | 1 - 2 |
| | | (particle counts per ml) | (particle counts per ml) | |
| Example 2 | 20 µm | 20787 | 64 | 52 |
| Comparative | | (particle counts per ml) | (particle counts per ml) | |
| Comparative | 5 µm | 4969 | 22 | 100 |
| Example 1 | | (particle counts per ml) | (particle counts per ml) | |
| Comparative | 3 µm | 1034 | 33 | 78 |
| Example 2 | | (particle counts per ml) | (particle counts per ml) | |
| Comparative | 1 µm | 882 | 11 | 89 |
| Example 3 | | (particle counts per ml) | (particle counts per ml) | |
| Comparative | 0.5 µm | 347 | 0 | 94 |
| Example 4 | | (particle counts per ml) | (particle counts per ml) | |

**Table 6**

| | particle concentration |
|---|---|
| Example 1 | 100 |
| Example 2 (Comparative) | 100 |
| Comparative Example 1 | 99.7 |
| Comparative Example 2 | 99.5 |
| Comparative Example 3 | 86.1 |
| Comparative Example 4 | 73.6 |

As is apparent from Table 5, the polishing slurry of Example 1 exhibits very satisfactory results with the number of scratches as small as 1 - 2. In contrast, it can be seen that in Comparative Examples 1 - 4, the polished objects suffer from a large number of scratches, although both particles having the diameter equal to or more than 0.99 µm and larger particles having the diameter equal to or more than 9.99 µm are reduced by filters having smaller mesh sizes. The polishing slurry of Example 2, though having the largest number of larger particles, caused 52 scratches which was more than that of Example 1 but less than those of Comparative Examples 1 - 4. Also, as is apparent from Table 6, the particle concentration in the polishing slurry is lower because the filter has a smaller mesh size. Though not shown, it was confirmed that not only was a large amount of scratches caused by the polishing slurries used in Comparative Examples 3, 4, but they also caused a reduction in the thickness that has been reduced by polishing, and exacerbated the in-plane uniformity of the thickness that has been reduced by polishing.

## Claims

1. A method of manufacturing a polishing slurry, comprising the steps of:
dispersing an abrasive in a dispersion medium so as to obtain a liquid to be processed which is a mixture of the abrasive and the dispersion medium;
**characterized by** centrifugally classifying the liquid to be processed with a centrifugal acceleration of 500G to 2500G to reduce the number of particles having a diameter of 9.99 µm or more to 100 or less in a volume of 1 ml of the liquid to be processed, after said dispersing step;
adjusting the liquid to be processed by adding chemicals and/or adjusting the concentration of the abrasive and /or adjusting pH, after said classifying step

2. Method according to claim 1, wherein said classifying step reduces the number of particles and particle groups having a weight equal to or heavier than the weight corresponding to a particle having a diameter of 0.99 µm, to 20 % or less of that before the classification, and reduces the number of particles and particle groups having a weight equal to or heavier than the weight corresponding to a particle having a diameter of 9.99 µm, to 1% or less of that before the classification, within said abrasive in the liquid to be processed.

3. Method according to claim 1, wherein said classifying step includes removing top 3 wt% of the heaviest particles within the abrasive in the liquid to be processed.

## Patentansprüche

1. Verfahren zur Herstellung einer Polieraufschlämmung mit den Schritten:
Dispergieren eines Schleifmittels in einem Dispersionsmedium, so dass eine zu verarbeitende Flüssigkeit erhalten wird, die eine Mischung des Schleifmittels und des Dispersionsmediums ist;
***gekennzeichnet durch*** zentrifugale Klassierung der zu verarbeitenden Flüssigkeit mit einer Zentrifugalbeschleunigung von 500 G bis 2500 G, um die Anzahl an Teilchen mit einem Durchmesser von 9,99 µm oder mehr auf 100 oder weniger in einem Volumen von 1 ml der zu verarbeitenden Flüssigkeit zu verringern, nach dem Dispergierschritt;
Einstellen der zu verarbeitenden Flüssigkeit **durch** Zugeben von Chemikalien und/oder Einstellen der Konzentration des Schleifmittels und/oder Einstellen des pH-Werts nach dem Klassierschritt.

2. Verfahren gemäß Anspruch 1, wobei der Klassierschritt die Zahl der Teilchen und Teilchengruppen mit einem Gewicht gleich dem oder schwerer als das Gewicht, das einem Teilchen mit einem Durchmesser von 0,99 *µ*m entspricht, auf 20 % oder weniger von jener vor der Klassierung verringert und die Zahl der Teilchen und Teilchengruppen mit einem Gewicht gleich dem oder schwerer als das Gewicht, das einem Teilchen mit einem Durchmesser von 9,99 µm entspricht, auf 1 % oder weniger von jener vor der Klassierung verringert innerhalb des Schleifmittels in der zu verarbeitenden Flüssigkeit.

3. Verfahren gemäß Anspruch 1, wobei der Klassierschritt das Entfernen der oberen 3 Gew.-% der schwersten Teilchen innerhalb des Schleifmittels in der zu verarbeitenden Flüssigkeit umfasst.

## Revendications

1. Procédé de fabrication d'une suspension de polissage, comprenant les étapes de :
dispersion d'un abrasif dans un milieu de dispersion de façon à obtenir un liquide à traiter qui est un mélange de l'abrasif et du milieu de dispersion ;
**caractérisé par** la classification centrifuge du liquide à traiter avec une accélération centrifuge de 500 G à 2500 G pour réduire le nombre de particules ayant un diamètre de 9,99 µm ou plus à 100 ou moins dans un volume de 1 ml du liquide à traiter, après ladite étape de dispersion ;
l'ajustement du liquide à traiter en ajoutant des produits chimiques et/ou l'ajustement de la concentration de l'abrasif et/ou l'ajustement du pH, après ladite étape de classification.

2. Procédé selon la revendication 1, dans lequel ladite étape de classification réduit le nombre de particules et de groupes de particules ayant un poids égal ou supérieur au poids correspondant à une particule ayant un diamètre de 0,99 µm, à 20 % ou moins de celui avant la classification, et réduit le nombre de particules et de groupes de particules ayant un poids égal ou supérieur au poids correspondant à une particule ayant un diamètre de 9,99 µm, à 1 % ou moins de celui avant la classification, dans ledit abrasif dans le liquide à traiter.

3. Procédé selon la revendication 1, dans lequel ladite étape de classification comprend l'élimination des 3 % en poids supérieurs des particules les plus lourdes dans l'abrasif dans le liquide à traiter.
